# EUROPÄISCHE PATENTSCHRIFT

(11) **EP 1 293 385 B1**
(45) Veröffentlichungstag und Bekanntmachung des Hinweises auf die Patenterteilung: **27.07.2005**
(21) Anmeldenummer: 02018412.3
(22) Anmeldetag: 16.08.2002
(51) Int. Cl.: B60R 7/06, B60R 7/04

(54) **Armaturenbrett für ein Kraftfahrzeug**
Dashboard for a motor vehicle
Tableau de bord pour un véhicule à moteur

(30) Priorität: 15.09.2001 DE 10145629
(43) Veröffentlichungstag der Anmeldung: 19.03.2003
(73) Patentinhaber: DaimlerChrysler AG, 70567 Stuttgart (DE)
(72) Erfinder: Secker, Walter, 71034 Böblingen (DE); Vahl, Uwe, 71296 Heimsheim (DE)

(56) Entgegenhaltungen:
- EP-A- 0 613 803
- EP-A- 0 701 923
- WO-A-00/51840
- FR-A- 2 745 770
- GB-A- 585 622
- GB-A- 2 171 470
- US-A- 4 643 381
- US-A- 4 852 499

## Beschreibung

Die Erfindung betrifft ein Armaturenbrett für ein Kraftfahrzeug, insbesondere für ein Nutzfahrzeug, nach der im Oberbegriff von Anspruch 1 näher definierten Art.

Aus der US 4,643,381 ist ein solches Armaturenbrett mit einem aufgeklebten Cupholder bekannt. Dieser weist einen drehbaren Schwallrand auf.

Aus der EP 0 613 803 A1 ist ebenfalls ein Armaturenbrett bekannt. Hierbei ist eine Auflageplatte zum Aufnehmen von Gegenständen vorgesehen, welche auf einem Hub-Schwenkzylinder angeordnet ist, der an einer Unterseite der Auflageplatte exzentrisch zu ihrem Flächenmittelpunkt angreift und dessen Hub- und Schwenkachse etwa lotrecht zur Auflageplatte ausgerichtet ist. Hierdurch soll ein besserer Komfort der Auflageplatte für Fahrer und Beifahrer ermöglicht werden. Allerdings ist diese Auflageplatte nachteiligerweise verhältnismäßig labil.

Die DE 44 09 562 C1 beschreibt ein Ablagefach für Fahrzeuginnenräume, bei welchem mehrere Staukästen in einem Antriebsmechanismus eingebunden sind, durch welchen sie hinter einer Kastenöffnung rotiert werden können.

Eine Arbeitsplatte im Fond eines Personenkraftfahrzeugs beschreibt die DE 26 47 511 A1. Diese als Schreibunterlage, Schreibmaschinenaufnahme oder dergleichen dienende Arbeitsplatte ist auf einem zweiholmigen Gestell drehbar und längsverschiebbar montiert, wodurch die Platte in jede gewünschte Arbeits- oder Schreibposition gebracht werden kann.

Aus der EP 0 778 174 B1 ist die Anordnung einer Platte in einem Kraftfahrzeug bekannt, welche aus einer Karosseriewand des Kraftfahrzeugs durch Drehen entnommen werden kann.

Aus der DE 24 23 225 A1, der DE 296 04 488 U1 und der DE 93 00 962 U1 sind Tische mit drehbaren Tischplatten bekannt.

Sämtliche der genannten Armaturenbretter oder Ablageflächen für Armaturenbretter von Kraftfahrzeugen haben jedoch den Nachteil, daß darauf befindliche Gegenstände für in dem Fahrzeug sich befindliche Personen, insbesondere während der Fahrt, nur schwer zu erreichen sind. Hierunter kann jedoch gegebenenfalls die Konzentration des Fahrers auf den Verkehr leiden.

Es ist daher Aufgabe der vorliegenden Erfindung, ein mit einer Ablage zum Unterbringen von Gebrauchsgegenständen versehenes Armaturenbrett für ein Kraftfahrzeug, insbesondere für ein Nutzfahrzeug zu schaffen, bei welchem die auf der Ablage angeordneten Gegenstände für einen Fahrer oder Beifahrer, also für eine in dem Kraftfahrzeug sich befindliche Person, leicht erreicht werden können. Zudem soll insbesondere die Ablagekapazität des Armaturenbretts vergrößert werden. Hierbei soll es sich um eine möglichst einfache und kostengünstige Lösung handeln.

Erfindungsgemäß wird diese Aufgabe durch ein Armaturenbrett nach den im Anspruch 1 genannten Merkmalen gelöst.

Durch die Drehbarkeit der erfindungsgemäßen Ablage ist es der in dem Kraftfahrzeug sich befindlichen Person, insbesondere dem Fahrer des Kraftfahrzeugs, sehr einfach möglich, durch Drehen der Ablage auch diejenigen Gegenstände zu erreichen, die sich relativ weit entfernt von ihm selbst befinden. Auf diese Weise ergibt sich eine erheblich vergrößerte Aufnahmekapazität des Armaturenbretts für beliebige Gegenstände, da diese auch an Stellen abgelegt werden können, wo sie bisher zumindest während der Fahrt nicht erreichbar waren.

Hierdurch führt das erfindungsgemäße Armaturenbrett mit der drehbaren Ablage zu einer Erhöhung der Fahrsicherheit, da insbesondere der Fahrer ohne sich von seinem Sitz bewegen zu müssen immer nur an ein und dieselbe Stelle greifen muß, nämlich z.B. an den ihm am nächsten liegenden Rand der Ablage, um dann durch Drehen jeden beliebigen, sich auf der Ablage befindlichen Gegenstand erreichen zu können, wodurch er sich besser auf den Verkehr konzentrieren kann.

Um ein Herunterfallen bzw. Herunterrutschen der Gegenstände von der erfindungsgemäßen Ablage zu verhindern, kann in besonders vorteilhaften Ausgestaltungen die Ablage einen nach oben gerichteten Rand aufweisen.

Um einen noch größeren Komfort zu erzielen, kann in einer weiteren vorteilhaften Ausgestaltung der Erfindung die Ablage über einen Elektromotor antreibbar sein.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: eine perspektivische Ansicht des erfindungsgemäßen Armaturenbretts mit der darauf angeordneten Ablage mit einer die Ablage bedienenden Person;
- Fig. 2: eine Draufsicht auf das Armaturenbrett gemäß Fig. 1;
- Fig. 3: eine vergrößerte Darstellung aus Fig. 2;
- Fig. 4: einen Schnitt nach der Linie IV-IV aus Fig. 3;
- Fig. 5: eine vergrößerte Darstellung nach der Linie V-V aus Fig. 4; und
- Fig. 6: eine alternative Ausgestaltungsform der Ablage aus Fig. 5.

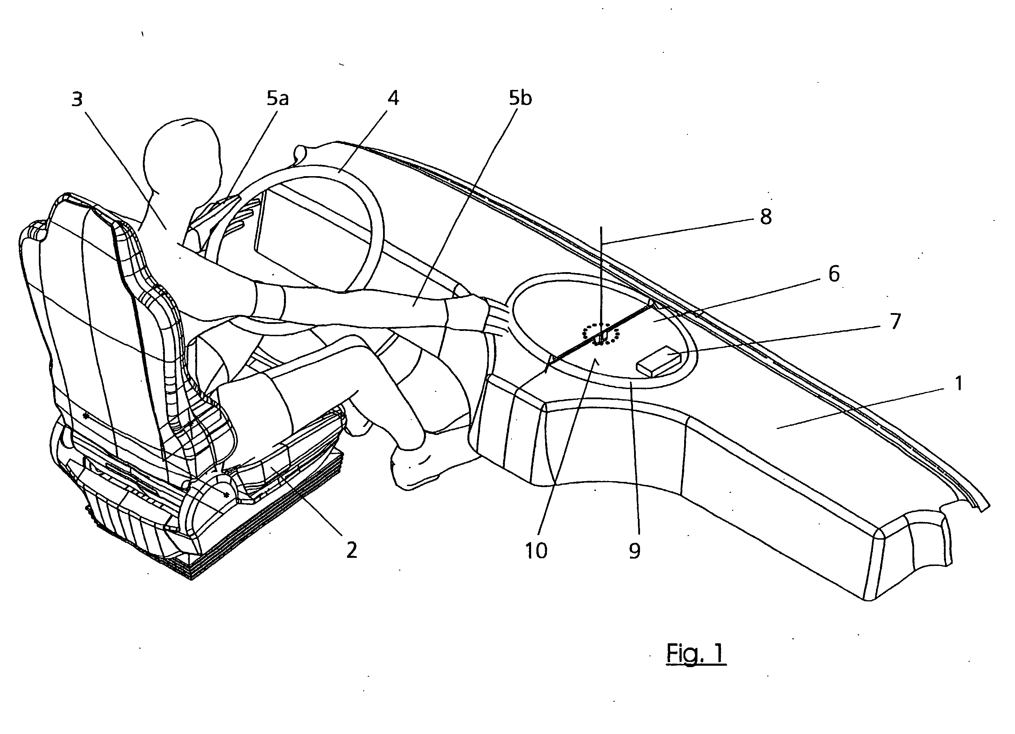

Fig. 1 zeigt ein Armaturenbrett 1 für ein in seiner Gesamtheit nicht dargestelltes Kraftfahrzeug, insbesondere ein Nutzfahrzeug, wie z.B. einen LKW, ein Wohnmobil oder einen Omnibus. Des weiteren ist ein Sitz, im vorliegenden Fall ein Fahrersitz 2, dargestellt, auf welchem sich eine Person befindet, im vorliegenden Fall ein Fahrer 3 des Kraftfahrzeugs. Daß es sich bei der Person um den Fahrer 3 handelt ist daran erkennbar, daß er ein mit dem Armaturenbrett 1 verbundenes Lenkrad 4 in seiner linken Hand 5a hält.

Da das Armaturenbrett 1 im dargestellten Ausführungsbeispiel symmetrisch ausgeführt ist, könnte es sich bei der Person 3 auch um den Beifahrer handeln oder das Lenkrad 4 könnte auf der rechten statt der linken Seite des Armaturenbretts 1 angeordnet sein, beispielsweise in Fahrzeugen für Linksverkehr.

Auf dem Armaturenbrett 1 ist eine Ablage 6 angeordnet, auf der sich im vorliegenden Fall ein Gegenstand 7 befindet. Die Ablage 6 ist in dem Armaturenbrett 1 um ihre Mittelachse 8 drehbar gelagert, so daß der Fahrer 3 durch Drehen an einem Rand 9 der Ablage 6, beispielsweise mit seiner rechten Hand 5b, den sich im vorliegenden Fall entfernt von ihm befindlichen Gegenstand 7 in seine Richtung drehen kann. Selbstverständlich können auf der Ablage 6 auch weitere, die Sicht des Fahrers 3 nicht behindernde Gegenstände 7, wie zum Beispiel Kaffeetassen, Schreibgeräte, Bücher, Zigaretten, Aschenbecher, Mobiltelefone usw., angeordnet sein.

Der Rand 9 ist im vorliegenden Fall nach oben gerichtet, so daß die Gegenstände 7 nicht von der Ablage 6 rutschen können. Dies wird unterstützt von der Tatsache, daß die Ablage 6 im vorliegenden Fall auf ihrer Oberfläche mit einem rutschfesten Belag 10 versehen ist. Gegebenenfalls kann die Ablage 6 jedoch auch ohne den Rand 9 ausgeführt sein. Außerdem kann die Ablage 6 eine oder mehrere nicht dargestellte Vertiefungen zur Aufnahme eines oder mehrerer Gegenstände 7 aufweisen. Weiterhin sind auch ein oder mehrere mit der Ablage 6 verbindbare Becherhalter oder dergleichen denkbar.

Im vorliegenden Fall ist die Ablage 6 kreisförmig ausgebildet und weist wenigstens die Größe eines DIN A4-Blattes auf, um dem Fahrer 3 die Möglichkeit zu geben, derartige Blätter, beispielsweise Arbeitsanweisungen oder dergleichen, oder auch Ordner in der genannten Größe auf der Ablage 6 aufzulegen. Alternativ sind auch eckige, ovale oder anders geformte und gegebenenfalls an die Form des Armaturenbretts 1 angepaßte Ablagen 6 denkbar.

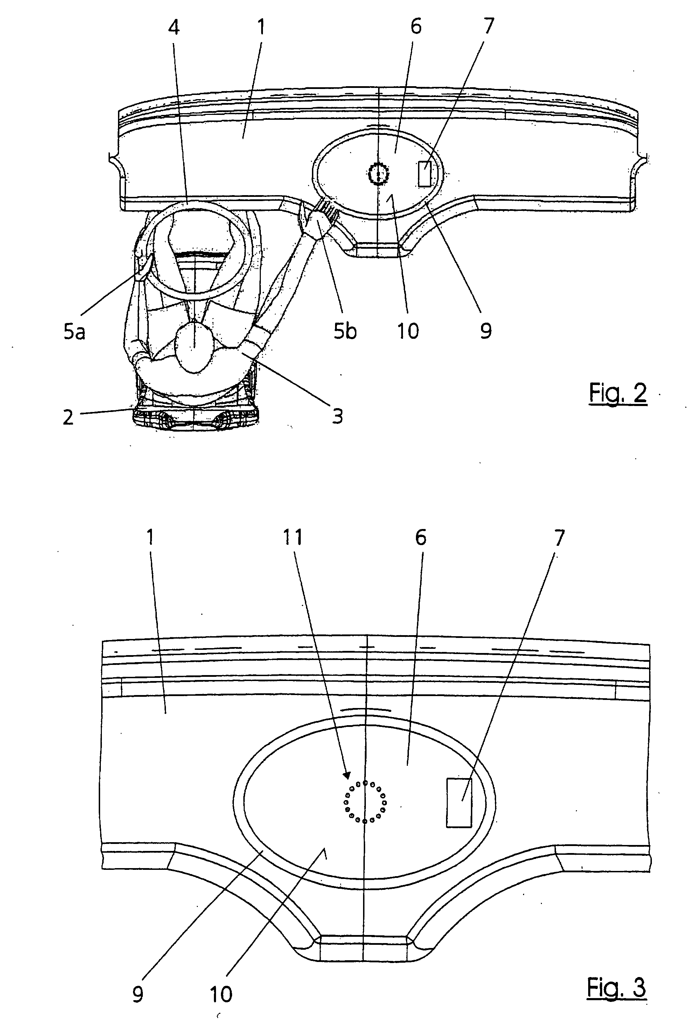

Aus der vergrößerten Darstellung gemäß Fig. 3 geht hervor, daß die Ablage 6 bzw. das Armaturenbrett 1 eine Arretiereinrichtung 11 aufweist. Diese ermöglicht ein Arretieren der Ablage 6 gegenüber dem Armaturenbrett 1 in bestimmten Winkelpositionen, wobei selbstverständlich auch andere als die dargestellten Winkel möglich sind.

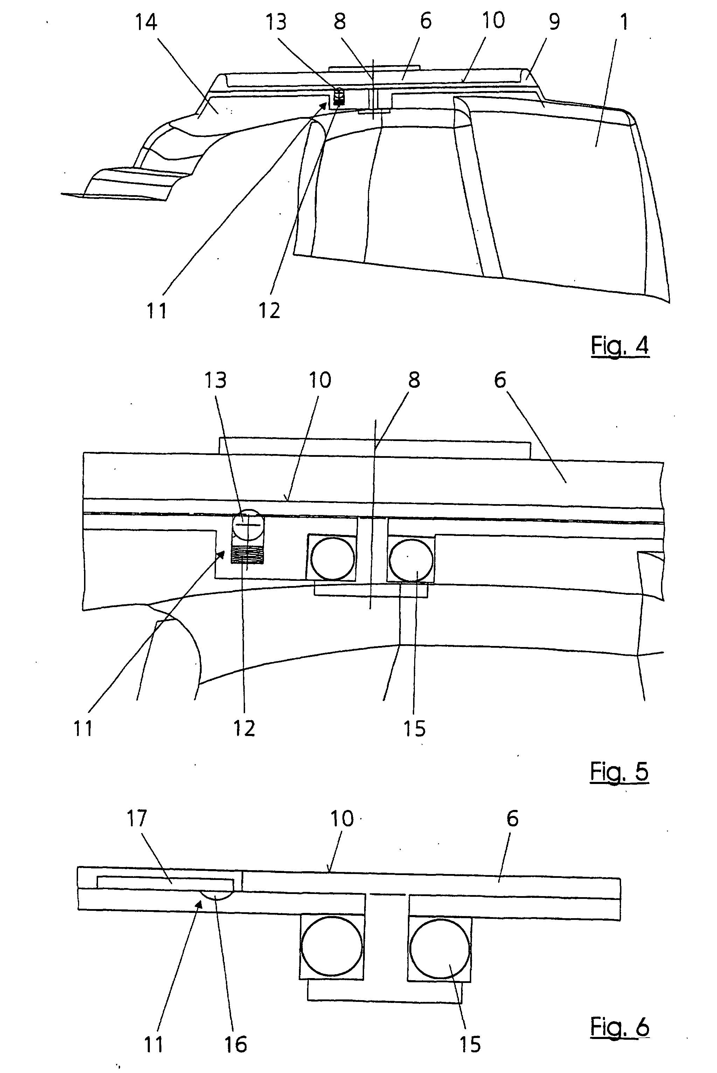

Aus dem Schnitt gemäß Fig. 4 und der vergrößerten Darstellung von Fig. 5 geht hervor, daß die Arretiereinrichtung 11 im vorliegenden Fall eine in dem Armaturenbrett 1 gelagerte, als Druckfeder 12 ausgebildete Feder und eine Kugel 13 aufweist, welche in nicht dargestellte Ausnehmungen in der Unterseite der Ablage 6 eingreift. Selbstverständlich könnte die Anordnung von Druckfeder 12 und Kugel 13 auch umgekehrt sein.

Des weiteren geht aus Fig. 4 hervor, daß die Ablage 6 auf einem Sockel 14 angeordnet ist, so daß sich eine erhöhte und damit von dem Fahrer 3 besser erreichbare Position für die Ablage 6 ergibt. Aus dieser Figur kann außerdem die Lagerung der Ablage 6 gegenüber dem Armaturenbrett 1 mittels eines im vorliegenden Fall als Kugellager ausgebildeten Lagerelementes 15 entnommen werden. Selbstverständlich wären auch andere Möglichkeiten zur Lagerung der Ablage 6 in dem Armaturenbrett 1 denkbar, um eine bessere Drehbarkeit derselben zu erreichen.

Eine weitere Möglichkeit zur Realisierung der Arretiereinrichtung 11 ergibt sich aus Fig. 6, wobei die Wirkung dieselbe ist wie oben unter Bezugnahme auf Fig. 4 und Fig. 5 beschrieben. Hierbei weist das Armaturenbrett 1 mehrere Vertiefungen 16 auf, von denen jedoch nur eine dargestellt ist und in welche ein an der Ablage 6 angebrachtes Federelement 17 eingreift. Das Federelement 17 ersetzt somit die oben beschriebene Kombination aus Druckfeder 12 und Kugel 13. Alternativ wäre es selbstverständlich auch möglich, das Federelement 17 an dem Armaturenbrett 1 anzubringen und die Vertiefungen 16 in der Ablage 6. Des weiteren könnten auch mehrere Federelemente 17 und lediglich eine Vertiefung 16 vorgesehen sein. Schließlich könnte die Arretiereinrichtung 11 auch durch andere geeignete Elemente gebildet werden.

In nicht dargestellter Weise kann die Ablage 6 beispielsweise von einem Elektromotor oder einer anderen, geeigneten Antriebseinrichtung angetrieben werden, so daß der Fahrer 3 nicht mehr selbst am Rand 9 der Ablage 6 drehen muß, sondern lediglich einen Schalter oder ähnliches betätigen muß. Ein solcher Schalter kann sich beispielsweise in dem oben beschriebenen Sockel 14 befinden, in dem auch noch andere Bedienelemente für das Kraftfahrzeug oder auch Luftausströmdüsen, also Öffnungen für den Luftaustritt von nicht dargestellten Luftkanälen, untergebracht sein können. Selbstverständlich können an dem Sockel 14 auch Schalter für völlig andere Funktionen angeordnet sein. In diesem Zusammenhang ist es möglich, daß es sich bei dem Elektromotor um einen Schrittmotor handelt, der bei jeder Betätigung des Schalters um einen bestimmten Winkelschritt weiterrückt, so daß für eine vollständige Umdrehung der Ablage 6 eine bestimmte Anzahl an Schalterbetätigungen notwendig wäre und auf die Arretiereinrichtung 11 verzichtet werden könnte. Ebenfalls denkbar ist es, daß sich die Ablage 6 so lange dreht, wie der Schalter gedrückt gehalten wird. Des weiteren könnte sich die Ablage 6 nach Betätigung des Schalters auch so lange drehen, bis dieser wieder gedrückt und der Elektromotor damit ausgeschaltet wird.

## Patentansprüche

1. Armaturenbrett für ein Kraftfahrzeug, insbesondere für ein Nutzfahrzeug, mit wenigstens einer auf dem Armaturenbrett angeordneter Ablage (6) zur Aufnahme von Gebrauchsgegenständen oder dergleichen, wobei die Ablage (6) derart drehbar gegenüber dem Armaturenbrett (1) gelagert ist, daß für eine Person (3) durch Drehen der Ablage (6) sämtliche auf derselben angeordnete Gegenstände (7) erreichbar sind,
**dadurch gekennzeichnet, daß**
die Ablage (6) in dem Armaturenbrett (1) um ihre Mittelachse (8) drehbar gelagert ist und auf ihrer Oberfläche mit einem rutschfesten Belag (10) versehen ist und über wenigstens eine Arretiereinrichtung (11) in bestimmten Winkelpositionen arretierbar ist.

2. Armaturenbrett nach Anspruch 1,
**dadurch gekennzeichnet, daß**
die Ablage (6) einen nach oben gerichteten Rand (9) aufweist.

3. Armaturenbrett nach einem der Ansprüche 1 oder 2,
**dadurch gekennzeichnet, daß**
die Ablage (6) kreisförmig ausgebildet ist.

4. Armaturenbrett nach einem der Ansprüche 1 oder 2,
**dadurch gekennzeichnet, daß**
die Ablage (6) oval ausgebildet ist.

5. Armaturenbrett nach einem der Ansprüche 1 bis 4,
**dadurch gekennzeichnet, daß**
die Ablage (6) wenigstens die Größe eines DIN A4-Blattes aufweist.

6. Armaturenbrett nach einem der Ansprüche 1 bis 5,
**dadurch gekennzeichnet, daß**
die wenigstens eine Arretiereinrichtung (11) eine in dem Armaturenbrett (1) gelagerte Feder (12) und eine mit der Ablage (6) in Berührung stehende Kugel (13) aufweist.

7. Armaturenbrett nach Anspruch 6,
**dadurch gekennzeichnet, daß**
über den Umfang der Ablage (6) verteilt mehrere Ausnehmungen zum Aufnehmen der Kugel (13) vorgesehen sind.

8. Armaturenbrett nach einem der Ansprüche 1 bis 7,
**dadurch gekennzeichnet, daß**
die Ablage (6) wenigstens eine Vertiefung zur Aufnahme eines Gegenstandes (7) aufweist.

9. Armaturenbrett nach einem der Ansprüche 1 bis 8,
**dadurch gekennzeichnet, daß**
die Ablage (6) über einen Elektromotor antreibbar ist.

10. Armaturenbrett nach einem der Ansprüche 1 bis 9,
**dadurch gekennzeichnet, daß**
das Armaturenbrett (1) wenigstens annähernd symmetrisch ausgebildet ist, wobei die Ablage (6) wenigstens annähernd in der Mitte des Armaturenbretts (1) angeordnet ist.

11. Armaturenbrett nach einem der Ansprüche 1 bis 10,
**dadurch gekennzeichnet, daß**
die Ablage (6) auf einem Sockel (14) drehbar angeordnet ist.

12. Armaturenbrett nach Anspruch 11,
**dadurch gekennzeichnet, daß**
der Sockel (14) mit Schaltern zum Bedienen der Ablage (6) versehen ist.

13. Armaturenbrett nach Anspruch 12,
**dadurch gekennzeichnet, daß**
der Sockel (14) mit Öffnungen für den Luftaustritt von Luftkanälen versehen ist.

## Claims

1. Dashboard for a motor vehicle, in particular for a utility vehicle, with at least one tray (6) arranged on the dashboard for accommodating implements or similar, which tray (6) is mounted so as to rotate relative to the dashboard (1) so that all objects (7) disposed on it can be reached by a person (3) by rotating the tray (6),
**characterised in that**
the tray (6) is mounted in the dashboard (1) so as to rotate about its central axis (8) and its surface is provided with an anti-slip facing (10) and it can be locked in specific angular positions by means of at least one locking mechanism (11).

2. Dashboard as claimed in claim 1,
**characterised in that**
the tray (6) has an upwardly directed edge (9).

3. Dashboard as claimed in one of claims 1 or 2,
**characterised in that**
the tray (6) is circular in shape.

4. Dashboard as claimed in one of claims 1 or 2,
**characterised in that**
the tray (6) is oval in shape.

5. Dashboard as claimed in one of claims 1 to 4,
**characterised in that**
the tray (6) is at least the size of a DIN A4 sheet.

6. Dashboard as claimed in one of claims 1 to 5,
**characterised in that**
the at least one locking mechanism (11) has a spring (12) mounted in the dashboard (1) and ball bearings (13) in contact with the tray (6).

7. Dashboard as claimed in claim 6,
**characterised in that**
several recesses are distributed around the periphery of the tray (6) for accommodating the ball bearings (13).

8. Dashboard as claimed in one of claims 1 to 7,
**characterised in that**
the tray (6) has at least one indentation for accommodating an object (7).

9. Dashboard as claimed in one of claims 1 to 8,
**characterised in that**
the tray (6) can be driven by an electric motor.

10. Dashboard as claimed in one of claims 1 to 9,
**characterised in that**
the dashboard (1) is of an at least approximately symmetrical design and the tray (6) is disposed at least more or less at the centre of the dashboard (1).

11. Dashboard as claimed in one of claims 1 to 10,
**characterised in that**
the tray (6) is disposed so as to be rotatable on a base (14).

12. Dashboard as claimed in claim 11,
**characterised in that**
the base (14) is provided with switches for operating the tray (6).

13. Dashboard as claimed in claim 12,
**characterised in that**
the base (14) is provided with orifices to allow air to be vented from air ducts.

## Revendications

1. Tableau de bord pour un véhicule automobile, en particulier pour un véhicule utilitaire, comprenant au moins un réceptacle (6) disposé sur le tableau de bord pour le logement d'objets usuels ou similaires, le réceptacle (6) étant logé de façon rotative par rapport au tableau de bord (1) de telle sorte que, par rotation du réceptacle (6), tous les objets (7) disposés sur celui-ci sont accessibles pour une personne (3),
**caractérisé en ce que**
le réceptacle (6) est logé dans le tableau de bord (1) de façon rotative autour de son axe médian (8) et est pourvu sur sa surface d'un revêtement (10) antidérapant et peut être verrouillé au moyen d'au moins un système d'arrêt (11) dans certaines positions angulaires.

2. Tableau de bord selon la revendication 1,
**caractérisé en ce que**
le réceptacle (6) présente un bord (9) dirigé vers le haut.

3. Tableau de bord selon l'une quelconque des revendications 1 ou 2,
**caractérisé en ce que**
le réceptacle (6) est conçu avec une forme circulaire.

4. Tableau de bord selon l'une quelconque des revendications 1 ou 2,
**caractérisé en ce que**
le réceptacle (6) est conçu avec une forme ovale.

5. Tableau de bord selon l'une quelconque des revendications 1 à 4,
**caractérisé en ce que**
le réceptacle (6) présente au moins la grandeur d'une feuille DIN A4.

6. Tableau de bord selon l'une quelconque des revendications 1 à 5,
**caractérisé en ce que**
le au moins un dispositif d'arrêt (11) présente un ressort (12) logé dans le tableau de bord (1) et une boule (13) en contact avec le réceptacle (6).

7. Tableau de bord selon la revendication 6,
**caractérisé en ce que**
plusieurs évidements pour la réception de la boule (13) sont prévus sur le pourtour du réceptacle (6).

8. Tableau de bord selon l'une quelconque des revendications 1 à 7,
**caractérisé en ce que**
le réceptacle (6) présente au moins une cavité pour la réception d'un objet (7).

9. Tableau de bord selon l'une quelconque des revendications 1 à 8,
**caractérisé en ce que**
le réceptacle (6) peut être entraîné au moyen d'un moteur électrique.

10. Tableau de bord selon l'une quelconque des revendications 1 à 9,
**caractérisé en ce que**
le tableau de bord (1) est conçu au moins approximativement de façon symétrique, le réceptacle (6) étant disposé au moins approximativement au centre du tableau de bord (1).

11. Tableau de bord selon l'une quelconque des revendications 1 à 10, '
**caractérisé en ce que**
le réceptacle (6) est disposé de façon rotative sur un socle (14).

12. Tableau de bord selon la revendication 11,
**caractérisé en ce que**
le socle (14) est pourvu d'interrupteurs pour la commande du réceptacle (6).

13. Tableau de bord selon la revendication 12,
**caractérisé en ce que**
le socle (14) est pourvu d'ouvertures pour la sortie d'air des conduits d'air.
